# EUROPEAN PATENT SPECIFICATION

(11) **EP 4 609 057 B1**
(45) Date of publication and mention of the grant of the patent: **02.09.2026**
(21) Application number: 22843697.8
(22) Date of filing: 21.12.2022
(51) Int. Cl.: F01D 1/16, F01D 5/14, F01D 25/30, F01D 25/32

(54) **A STEAM TURBINE AND A USE OF THE STEAM TURBINE, A METHOD OF MANUFACTURING OR SERVICING OF SAID STEAM TURBINE, A SMALL-MODULAR REACTOR AND A POWER PLANT INCLUDING SAID STEAM TURBINE**
DAMPFTURBINE UND VERWENDUNG DER DAMPFTURBINE, VERFAHREN ZUR HERSTELLUNG ODER WARTUNG DER DAMPFTURBINE, KLEINER MODULREAKTOR UND KRAFTWERK MIT DER DAMPFTURBINE
TURBINE À VAPEUR ET UTILISATION DE LA TURBINE À VAPEUR, PROCÉDÉ DE FABRICATION OU D'ENTRETIEN DE LADITE TURBINE À VAPEUR, RÉACTEUR MODULAIRE DE PETITE TAILLE ET CENTRALE ÉLECTRIQUE COMPRENANT LADITE TURBINE À VAPEUR

(43) Date of publication of application: 03.09.2025
(73) Proprietor: GE Vernova Technology GmbH, 5400 Baden (CH)
(72) Inventor: CHANDLER, Kane, 5400 Baden (CH)
(74) Representative: Wesela-Bauman, Grzegorz
(86) International application number: PCT/EP2022/087318
(87) International publication number: WO 2023/156049

(56) References cited:
- DE-A1- 1 426 809
- DE-U1- 202010 012 298
- US-A- 3 375 665

## Description

### 1.TECHNICAL FIELD

The present invention relates to a steam turbine, such as a steam turbine for a power plant or a steam turbine for an industrial process. In particular the power plant selected from a group including a fossil power plant, a renewable energy power plant, a nuclear power plant or a waste-to-energy power plant. The steam turbine can also be for a small modular reactor. The invention pertains to wetness and droplet formation within the steam turbine to achieve an increase of efficiency.

### 2. BACKGROUND

Steam turbines are conventionally used in power plants, such as nuclear power plants, renewable energy power plants and coal power plants, to convert energy of heated steam into mechanical energy in the form of rotation of a turbine shaft. The rotation of the turbine shaft may drive an electrical power generator for the generation of electrical power. Heating of the steam provided to the steam turbine may in a nuclear power plant be caused by a nuclear reaction, in a coal power plant by burning of coal, in a combined cycle power plant through a heat exchanger, or with the use of renewable sources of energy at a renewable energy power plant.

The steam in a steam turbine is fed from a steam inlet through a plurality of sections to a steam outlet. The sections can involve high-pressure, medium-pressure and low-pressure sections. Each section usually comprises stages which include a stationary part and a movable part. The stationary part can be coupled to the casing, and hence is not movable. In each stage, the stationary part is located upstream relative to the movable part.

Several sections may be serially coupled to drive a common turbine shaft. For example, serially coupled sections driving a common turbine shaft may be individually optimised to receive steam at certain pressures. The high pressure section may receive steam at a highest pressure, e.g., from a boiler. The pressure may decrease and may be channelled to the intermediate pressure section. Likewise, the steam may be channelled from the intermediate pressure section to the low pressure section.

There is always interest in achieving higher efficiency in steam turbines. A known approach from a document US 6345952 B1 is to increase efficiency of a steam turbine by using a steam turbine with sections having an average degree of reaction below 0.5 (i.e., below 50%) where at least two sections have different average reaction degrees. The efficiency gain is achieved by using smaller thrust-compensating pistons which have smaller leakage steam losses. Said smaller leakage steam losses are responsible for higher efficiency. However, it is not clear how big the actual efficiency gain is. It may also be the case that, in certain scenarios, other losses may overcome the efficiency gain provided by smaller leakage steam losses. DE 14 26 809 A1, discloses discloses a steam turbine including at least one steam turbine section, wherein said at least one steam turbine section comprises at least three blade stages 111-114, wherein said blade stages include a row of fixed blades 109,112,113,114 and an accompanying row of moving blades 111,112,113,114 that is downstream of the row of fixed blades, and wherein said blade stages include: a single nucleating blade stage 112, at least one downstream blade stage 113, and at least one upstream blade stage 111, wherein said at least one downstream blade stage 113 is located downstream of said nucleating blade stage and said at least one upstream blade stage 109 is located upstream of said nucleating blade stage, and wherein said nucleating blade stage is including the location of the Wilson point.

It should also be noted that steam turbines with low degree of reaction are commonly known as impulse steam turbines and steam turbines with a degree of reaction of approximately 50% are commonly known as reaction steam turbines. In general, impulse steam turbines include impulse technology blades and reaction steam turbines include reaction technology blades. Impulse technology blades are designed so that the majority of steam expansion occurs in the fixed blade row and reaction technology blades are designed so that approx. 50% of the steam expansion occurs in each of the fixed and moving blade rows.

There is a need for a more versatile steam turbine design that will allow the achievement of higher efficiency in comparison to known steam turbines.

### 3. SUMMARY

The present invention provides a steam turbine according to claim 1. The principles of the invention will be disclosed below and explained. It should be noted that any explanations are provided for a better understanding of the invention and should not be understood as exhaustive or limiting to the invention.

It is a common problem in steam turbines that the steam may become wet due to wetness formation within the steam turbine. Wetness formation includes formation of water droplets of various sizes due to changes of pressure and/or temperature. Formation of water droplets is responsible for decreasing the efficiency of steam turbines, for example, by affecting movable parts. Water formation also contributes to erosion and corrosion of steam turbines. Said water may be removed from the steam turbine and thus a number of solutions were developed to handle water within the steam turbine.

Improved efficiency of the invention is achieved by a specific and surprising handling of wetness formation within the steam turbine according to the invention. Specifically, instead of managing water formed within the steam turbine, the invention is affecting how and where wetness formation takes place. At the same time, the invention can be realized as an impulse turbine or as a reaction turbine. Embodiments of the invention also include an industrial steam turbine. It is also possible to achieve an increase of efficiency for designs where the degree of reaction differs between stages, i.e., mixed reaction-impulse steam turbines.

### Nucleating blade stage

A steam turbine according to the invention includes at least one steam turbine section. In embodiments, said steam turbine section can be a high-pressure, a medium-pressure or a low-pressure section. Embodiments of the invention include combinations of any of high-pressure, medium-pressure and low-pressure sections in the steam turbine.

The steam turbine section includes at least three blade stages. Each blade stage includes a row of fixed blades and an accompanying row of moving blades that is downstream of the row of fixed blades. A skilled person understands that in steam turbines the interaction between a row of fixed blades and an accompanying row of moving blades is responsible for inducing rotation of steam turbines and ultimately for energy production.

The steam turbine according to the invention includes at least three blade stages: a single nucleating blade stage, at least one downstream, and at least one upstream blade stage. Said at least one downstream blade stage is located downstream from the nucleating blade stage. The term "downstream" refers to a general flow of steam and thus steam flows from the nucleating blade stage to said one or more downstream blade stages.

The purpose of the nucleating blade stage is to modify wetness formation such that the number of droplets formed in the nucleating blade stage by homogeneous nucleation is increased and said droplets will grow to smaller sizes in the downstream locations of the turbine. Thereby limiting or even preventing nucleation downstream of the nucleating blade stage, such as secondary or tertiary nucleation which is a problem for known steam turbines. Said secondary or tertiary nucleation is decreasing efficiency due to the consequences of departure from equilibrium in conditions within the steam turbine.

### Wilson point

The point of the primary onset of spontaneous condensation along a fluid pathline in the turbine is known as the Wilson point. The fluid pathlines are the trajectories that individual fluid particles follow as they travel through the turbine. The Wilson point is a known term by the skilled person and it coincides with the region of maximum vapour subcooling along the pathline. The location of the Wilson point can be determined by using numerical methods or through measurements for a given design of a steam turbine. Also, the Wilson point locations can be selected by a specific design of a steam turbine. The design of the turbine according to the invention is such that the Wilson point is located within the nucleating blade stage. The purpose of positioning the Wilson point within the nucleating blade stage is that the nucleating blade stage provides favourable conditions for homogeneous nucleation. Favourable conditions for homogeneous nucleation include an extensive (i.e., high expansion rate) region where the fluid expands rapidly. According to the invention said region of high expansion rate is controlled by setting the stage loading for the nucleating blade stage.

### Stage loading

According to the invention, the stage loading of the nucleating blade stage is from 1.4 to 2.2. The stage loading is a term known in this field and aspects of the stage loading will be explained further in the description. It should be noted that typical loading for blade stages using reaction technology is between 0.8 and 1.2. The most significant increase of efficiency is observed for the stage loading from 1.4 to 2.2 for the nucleating blade stage. There are other known structural modifications to a steam turbine that can allow to create a localized high expansion rate on a single blade stage.

The stage loading at 2.3 and above increases viscous losses in the flow boundary layers. The invention compensates for this loss of efficiency, so that the steam turbine with loading of 2.3 has comparable efficiency to known steam turbines. A benefit of this design is a possibility to produce steam turbines with higher stage loading of 2.3 which are at least as efficient as the known designs and which are beneficial, for example, where there is a need to use a small number of stages.

In the invention, the stage loading of said at least one downstream blade stage is lower than the loading of the nucleating blade stage. This aspect ensures that the benefits of the modification of wetness formation by the nucleating blade stage in terms of increase of efficiency are not compensated by increase of losses in the downstream blade stages. In embodiments including a plurality of downstream blade stages, said plurality has the stage loading lower than the stage loading for the nucleating stage.

In embodiments, the stage loading of said at least one downstream blade stage is 60-70% of the stage loading of the nucleating blade stage or less. Additionally or alternatively, not less than 20-35% of the stage loading of the nucleating blade stage. The combination of both conditions is the most efficient range of stage loadings. At the same time, the open-end ranges offer improvement of efficiency. Various designs are included in these embodiments and the stage loading of said at least one downstream blade can be equal to 50-60%, 40-65%, 25-45% etc. of the stage loading of the nucleating blade stage.

According to the invention, the stage loading of said at least one downstream blade stage is from 0.5 to 1.4. This is to ensure the most effective way to use nucleation by the nucleating blade stage and thus offers further increase in efficiency. This ensures also lower water deposition which provides reduced coarse water losses and reduced erosion / corrosion.

### Impulse and reaction turbines

The nucleating blade stage can be an impulse blade stage or a reaction blade stage in various embodiments. The impulse blade stage is most preferred as it creates a localised region of high expansion rate and high pressure drop in the fixed blade row. This is connected with better aerodynamic performance and, hence, efficiency gain. A highly loaded reaction blade stage can have an increase of viscous boundary layer losses when compared to the impulse blade stage. It follows that the reaction blade stage embodiment of the nucleating blade stage is more efficient than the known designs, but not as efficient as the embodiment with the impulse blade stage.

### Stage reaction

In embodiments, the stage degree of reaction (also herein called "the stage reaction") for the nucleating blade stage can be from 0% to 55%. Decrease of the stage degree of reaction increases the local expansion rate in the fixed blade row. Those parameters result in an increasing of the nucleation rate and formation of a large number of small droplets in the nucleating blade stage. Low values of the stage degree of reaction also make the nucleation zone narrower. The nucleation zone is the place where droplets are being formed. This is beneficial as it allows to more precisely control wetness formation. Decreasing of the stage reaction makes the droplets smaller in size which reduces wetness related losses in downstream blade stages. Therefore, increase of efficiency is observed for decrease in the stage reaction from 55% to 0%. It follows that an embodiment with the stage reaction between 0-20% is more efficient than with the stage reaction between 30% and 50%. Consequently, for the stage reaction decreasing from 50%, 49%, 48%, 47%, 46%, 45%, 40%, 35%, 30% there is an increase of expansion rate and pressure drop. Thus, an increase of efficiency is observed. Between various designs, this increase may not be linear. The stage reaction equal to 51%, 52%, 53%, 54% or 55% is also beneficial, but we may observe a slight decrease in efficiency around 55% of the stage reaction.

The degree of reaction of said at least one downstream blade stage can be from 40% to 60% in embodiments. This range secures further reduction of losses: lower blade boundary layer loss, lower flow turning and therefore lower droplet deposition, and lower departures from equilibrium and therefore lower thermodynamic wetness loss. The most preferred values of the stage reaction for said at least one downstream blade stage is around 50%. For example, between 45%-55%, so including 45%, 46%, 47%, 49%, 50%, 51%, 52%, 53%, 54% and 55%.

In embodiments, the stage reaction of said at least one downstream blade stage can be higher than for the nucleating blade stage. This offers certain reduction in the above-mentioned loss. The highest reduction of said losses is observed when the stage reaction of said at least one downstream blade stage is higher than for the nucleating blade stage and the stage reaction of said at least one downstream blade stage is from 40% to 60%.

In various embodiments of the invention, the steam turbine section can further comprise at least one upstream blade stage that is upstream of the nucleating blade stage. The purpose of said at least one upstream blade stage is, when needed, to alter the conditions of the steam so that the Wilson point occurs within the most favourable region of the nucleating blade stage. The stage loading of said at least one upstream blade stage can be smaller than the stage loading for the nucleating blade stage in embodiments. This ensures more control over start of nucleation and thus is beneficial for the efficiency gain. In more specific embodiments, the stage loading is from 0.5 to 2.0 which is responsible for effective pressure drop and higher efficiency gain.

In the same or different embodiments, the stage degree of reaction of said at least one upstream blade stage can be higher than for the nucleating blade stage. Specific embodiments can have the stage reaction of said at least one upstream blade stage from 0% to 60%.

The skilled person will select a particular value of the stage loading and / or the stage reaction to ensure that the primary spontaneous nucleation occurs in the high expansion rate region of the nucleating blade stage thereby further enhancing efficiency of the steam turbine.

In embodiments, said at least one upstream stage can have an axial flow stage, radial flow stage or an axial-radial flow stage.

### Steam turbine sections

Said steam turbine section according to the invention can be selected from a high-pressure section, a medium-pressure section or a low-pressure section. It follows that the invention is versatile as it can be realized in all types of sections of steam turbines.

In further embodiments, the steam turbine can include two said steam turbine sections, wherein one is a high-pressure section and one is a medium-pressure section, or wherein the steam turbine includes three said steam turbine sections wherein one is a high-pressure section, one is a medium-pressure section and one is a low-pressure section. It follows that all known configurations of steam turbines can be used with the invention. This further underlines the versatile character of the invention. It should be noted that combination of sections including the invention can further increase the efficiency of the steam turbine. This increase will not be purely additive, but synergetic, in certain embodiments as change of nucleation with the nucleating blade stage of the invention in section upstream will affect wetness losses in downstream sections.

### Small modular reactors

Another aspect of the invention includes a small-modular reactor including the steam turbine according to the embodiments of the invention. Application of the steam turbine according to the invention in small modular reactors (SMRs) is relevant for efficiency of these limited-in-size reactors.

### Power plants and industrial processes

Another aspect of the invention pertains to a power plant selected from a group including a fossil power plant, a combined cycle power plant, a renewable energy power plant, a waste-to-energy power plant, a nuclear power plant and steam turbines used for industrial processes. The steam turbine can be used in industrial process which include, for example, district heating. The steam turbine of the embodiments of the invention can be realized as an industrial steam turbine. Any of the listed power plants or industrial processes can include the steam turbine according to the embodiments of the invention.

The steam turbine can be used as an upgrade to an existing fleet of fossil power plants or as part of new fossil power plants. Higher efficiency will mean that less coal will be needed to produce the same amount of energy. Therefore, the steam turbine according to the embodiments of the invention decreases the environmental impact of any fossil power plant.

The steam turbine according to the embodiments of the invention can be used in a cycle with a gas turbine thereby it is suitable for a combined cycle power plant. Similar benefits are for the combined cycle power plant as for the fossil power plant.

The renewable energy power plant can benefit from the steam turbine according to the invention by reaching the efficiency expected for the renewable energy power plant to meet its power producing expectations. Higher efficiency of the renewable energy power plant will allow it to maximize the usage of, for example, the time when the sun operates.

Benefits of the embodiments of the invention for nuclear power plants involve a possibility to maximize the usage of a nuclear sources. The invention can be used on the largest in the world steam turbines such as half-speed units. Increasing of the efficiency of already existing fleet of nuclear power plants is beneficial for any power plant owner as it allows to obtain higher energy production without the need to build additional nuclear power plants or without the need to largely modify nuclear power plants. This allows to significantly lower the time that is needed to produce more energy from nuclear power plants as any alternative, for example, building new power plants or adding new units to existing ones takes years to be completed.

### Power production increase

Another aspect of the invention relates to a use of a steam turbine of the embodiments of the invention for increasing power production of a power plant. Said power plant can be any known or new-build power plant. Additionally, the power plant can be a fossil power plant, a combined cycle power plant, a renewable energy power plant or a nuclear power plant. It is noted that increase of efficiency, even at the level of up to a few percent by the embodiments of the invention (from 0.1%, 0.2%, 0.3%, 0.4%, 0.5%, 0.6%, 0.7%, 0.8%, 0.9%, 1%, 1.2%, 1.4%, 1.6%, 1.8% up to 2% or more the most efficient embodiments of the invention) is translated to a significant increase in power production by a power plant. For any power plant, an increase of power production by a fraction or even by a few percent translates to enormous benefits. Said benefits may include better usage of resources (e.g., coal, nuclear source, sun light), more stable production of energy at the time of increase in demand for electrical power or production of less wastes by a power plant.

### Manufacturing and servicing

A further aspect of the invention is a method of manufacturing or servicing of a steam according to claim 12.

In an embodiment, the method of manufacturing or servicing of a steam turbine further includes providing that

"Degree of reaction" (the stage reaction) and "loading" are commonly well-established terms associated with turbine stages of a steam turbine. These terms, and their calculations are further described in the detailed part of the present disclosure. However, by changing the design, e.g., blade size, width, distribution, geometry, etc., of the row of fixed blades and/or of the row of moving blades of a turbine stage, the stage loading and/or stage reaction can be changed.

The skilled person will recognize that, unless stated otherwise, the embodiments, examples and features of said embodiments and examples can be combined together to form new embodiments and examples forming part of this disclosure. Also, division of this disclosure into parts or paragraphs should not impose artificial for the skilled person constraints on the scope of the invention as defined by the claims.

### 4. BRIEF DESCRIPTION OF FIGURES

Embodiments of the disclosure will be described in more detail in the following with regard to the accompanying figures. The figures show one way of implementing the present disclosure and are not to be construed as being limiting to other possible embodiments falling within the scope of the attached claim set.

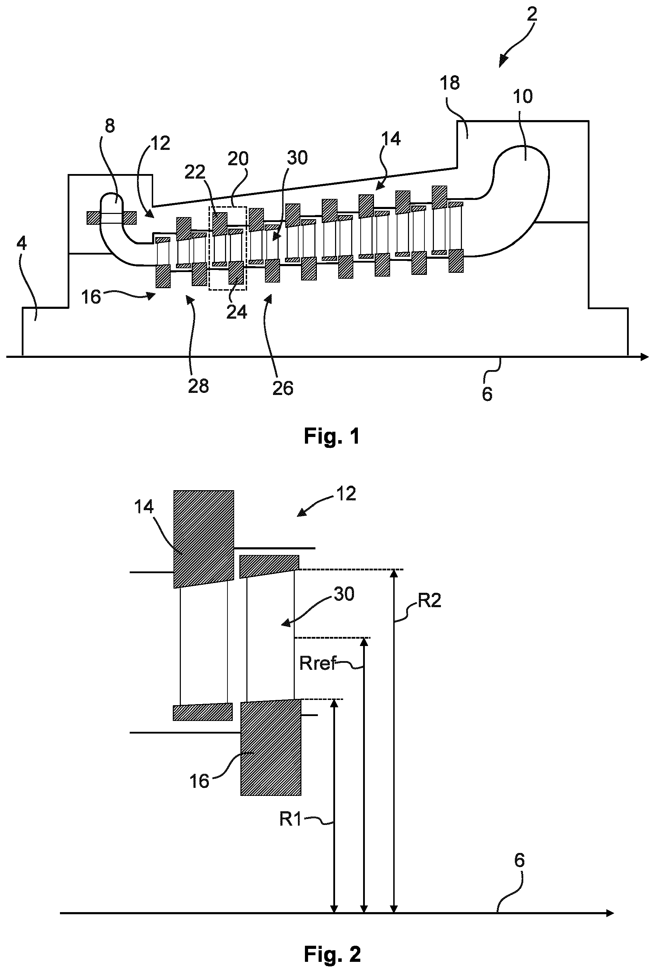

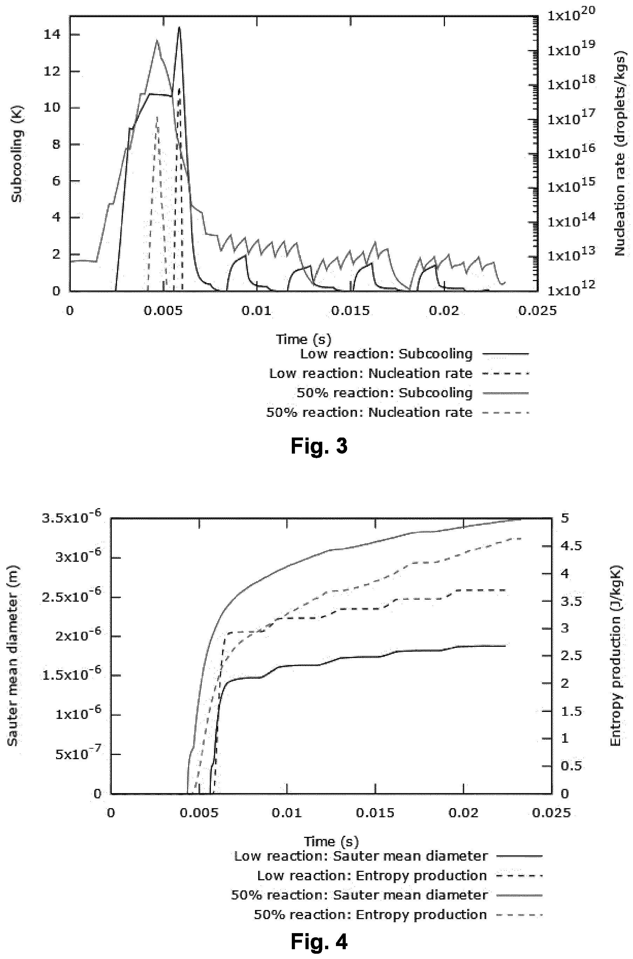

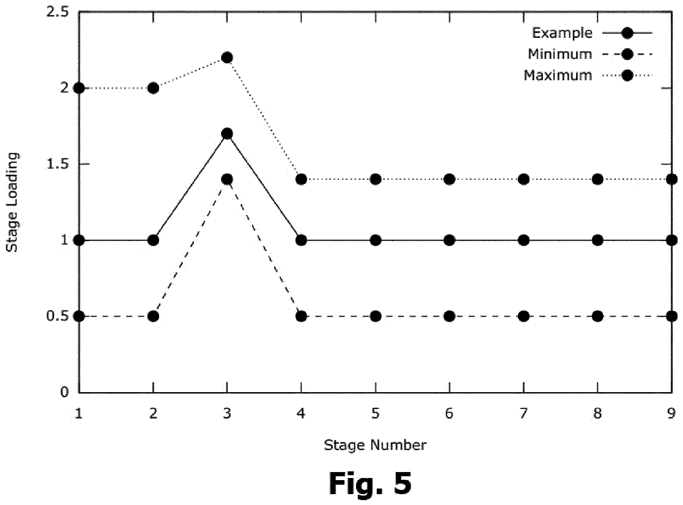

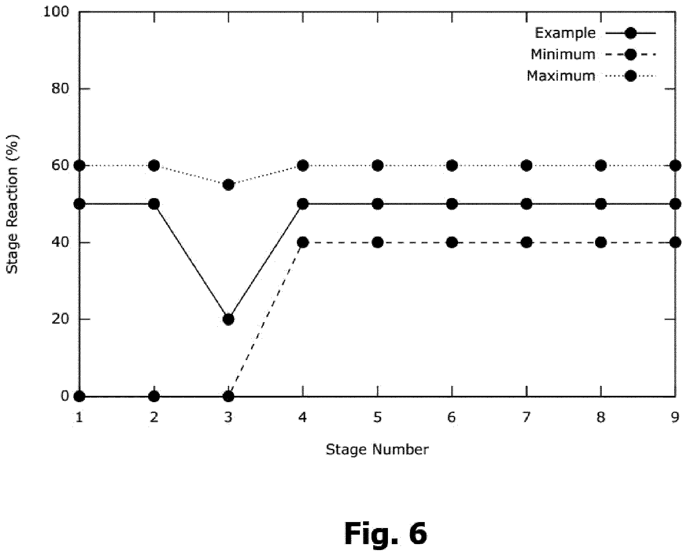

Fig. 1 is a schematic diagram illustrating an exemplary steam turbine according to the invention, Fig. 2 is a schematic diagram illustrating an exemplary turbine stage with a row of fixed blades and a row of moving blades for understanding of the stage loading and the stage reaction, Fig. 3 is a diagram showing impact of the stage reaction on subcooling and nucleation rate for the invention, Fig. 4 is a diagram showing impact of the stage reaction on entropy production and Sauter mean diameter for the invention, Fig. 5 is a diagram showing preferred embodiments of the invention having various values of the stage loading of each stage of a steam turbine, and Fig. 6 is a diagram showing preferred embodiments of the invention having various values of the stage reaction of each stage of a steam turbine.

### 5. DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. For example, expressions like "maximum" or "minimum" are for preferred embodiments and do not present boundaries for the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

Fig. 1 is a schematic diagram illustrating an exemplary steam turbine 2. The steam turbine 2 comprises a turbine shaft 4 extending along a turbine axis 6. The turbine shaft 4 is rotatable relative to a casing 18 of the steam turbine 2.

The steam turbine 2 comprises a steam inlet 8 and a steam outlet 10. The steam turbine 2 further comprises a plurality of turbine stages 12 between the steam inlet 8 and the steam outlet 10. The steam inlet 8 is fluidly connected to the steam outlet 10 such that steam is flowing from the steam inlet 8 to the steam outlet 10. Because the plurality of turbine stages 12 is arranged between the steam inlet 8 and the steam outlet 10 steam is flowing from the steam inlet 8 to the steam outlet 10 through the plurality of turbine stages 12. Fig. 1 shows 9 stages and one upstream stage has a radial-axial flow configuration. A different number of stages can be realized and stages can have a different configuration.

It should be realized that the steam turbine 2, in particularly the plurality of turbine stages 12, is substantially symmetrical about the turbine axis 6, and therefore, only half of a cross section is illustrated in Fig. 1.

Each of the plurality of turbine stages 12 comprises a row of fixed blades 14 and a row of moving blades 16. The row of fixed blades 14 can be fixed to the casing 18 or to another element, e.g., a diaphragm. The row of moving blades 16 is attached to the turbine shaft 4. A combination of moving blades and the shaft is called a rotor. Thereby, rotation of the row of moving blades 16, as caused by the flow of steam from the steam inlet 8 to the steam outlet 10, results in rotation of the turbine shaft 4. The row of fixed blades 14 has various functions which includes adapting the flow of steam so as to cause the steam exiting the row of fixed blades 14 to efficiently cause rotation of the row of moving blades 16. Each of the plurality of turbine stages have a stage reaction and a stage loading, which is described in more detail in relation to Fig. 2. The exemplary turbine stage 12. The turbine stage 12 includes the row of fixed blades 14 and the row of moving blades 16. An airfoil is depicted as 30.

The row of fixed blades 14 and the row of moving blades 16 are arranged around the turbine shaft 4 and the turbine axis 6. A trailing edge of the blade part 30 of the row of moving blades 16 extends from a minimum radius R1 from the turbine axis 6 to a maximum radius R2 from the turbine axis 6 where R1 is the minimum radius of the moving blade trailing edge in the flowpath and R2 is the maximum radius of the moving blade trailing edge in the flowpath. For example, for a shrouded blade R2 will correspond to the radius at the intersection of the shroud surface and trailing edge and for a free-tip blade R2 will correspond to the radius at the blade tip. A stage reference radius Rref is defined by: $Rref = \frac{R 2 + R 1}{2}$

Thereby the reference tangential speed of the row of moving blades 16 may be expressed by: $U = RrefΩ$ where Ω is the rotating speed of the turbine shaft 4.

The stage loading of a turbine blade stage may be given by $ψ = \frac{{Δh}_{0}}{{U}^{2}}$ where *Δh₀* is the average specific stagnation enthalpy drop across the turbine stage 12. The average specific stagnation enthalpy drop is equivalent to the specific work output of the blade stage. In other words, to the blade stage power output divided by the blade stage inlet mass flowrate.

As mentioned previously, each of the turbine blade stages 12 have a stage degree of reaction or simply, the stage reaction. The stage reaction for a turbine stage 12 may be given by: $λ = \frac{{Δh}_{MB}}{{Δh}_{S}}$

Where *Δh_{MB}* is the specific static enthalpy drop across the row of moving blades 16, and *Δh_{S}* is the specific static enthalpy drop across the turbine blade stage 12 evaluated at the reference radius Rref. For the moving blade and fixed blade leading edges the reference radius is defined similarly so that it is at 50% of the aerofoil height.

Returning to Fig. 1, as part of the plurality of turbine stages 12, the steam turbine 2 comprises a nucleating blade stage 20 comprising a row of fixed blades 22 and a row of moving blades 24. The row of fixed blades 22 can be, like other blade stages 14, fixed to the casing 18. The row of moving blades 24 is, like other row of moving blades 16, attached to the turbine shaft 4.

The nucleating blade stage 20 is designed so as to cause a high expansion rate of the steam in either of the row of fixed blades 22 and the row of moving blades 24. Thereby, a high number of small droplets is formed in the nucleating blade stage 20. The small droplets may be transferred with the flow of steam to the steam outlet and formation of large droplets within the steam turbine 2 is thereby reduced.

As part of the plurality of turbine stages 12, the steam turbine 2 may comprise one or more downstream blade stages 26 (in the illustrated example a plurality of downstream blade stages 26). The downstream blade stages 26 are arranged between the nucleating blade stage 20 and the steam outlet 10. Hence, the formation of small droplets in the nucleating blade stage 20 causes lower deposition of water in the downstream blade stages 26. Thereby, wetness loss and erosion/corrosion may be reduced.

The high expansion rate of the nucleating blade stage 20 is achieved by designing the nucleating blade stage 20 to have a high stage loading. The stage loading of the nucleating blade stage 20 is between 1.4 and 2.2.

Additionally, the stage loading of the nucleating blade stage 20 is higher than the stage loading of at least one of the downstream blade stages 26. Effectively, the stage loading of at least one or all of the downstream blade stages 26 may be lower than the stage loading of the nucleating blade stage 20, such as at least 10% lower than the stage loading of the nucleating blade stage, such as at least 15% lower than the stage loading of the nucleating blade stage 20.

As part of the plurality of turbine stages 12, the steam turbine 2 may comprise one or more upstream blade stages 28 (in the illustrated example a plurality of upstream blade stages 28, e.g., two). The upstream blade stages 28 are arranged between the steam inlet 8 and the nucleating blade stage 20. The upstream blade stages 28 may be provided such that the nucleating blade stage 20 is arranged at a position along the flow of steam so that the droplet formation in the nucleating blade stage 20 is optimized. For example, the upstream blade stages 28 may work to lower the pressure and/or temperature of the steam so as to enhance the intended droplet formation of the nucleating blade stage 20.

The stage loading of one or more of the upstream blade stages 28 is lower than the stage loading of the nucleating blade stage 20. However, the stage loading of the upstream blade stages 28 is higher than the stage loading of the downstream blade stages 26. The stage loading of the upstream blade stages 28 is between 0.5 and 2.

In one example, the stage loading of the upstream blade stages 28 is 1, the stage loading of the nucleating blade stage 20 is 1.6 and the stage loading of the downstream blade stages 26 is 1.

The stage reaction of the various turbine stages 12 of the steam turbine 2 may vary.

In some examples, the stage reaction of the nucleating blade stage 20 may be low, such as less than 0.55, such as less than 0.45, such as less than 0.25. For example, the nucleating blade stage may be an impulse stage. In one example presented on Fig. 5, there are two upstream blade stages with the stage loading of 1, the nucleating blade stage with the stage loading of 1.6, and the downstream blade stages with the stage loading of 1.

The stage reaction of the downstream blade stages 26 is between 0.4 and 0.6. In some examples, the stage reaction of the upstream blade stages 28 may be between 0 and 0.6.

In one example, the stage reaction of the upstream blade stages 28 is 0.5, the stage reaction of the nucleating blade stage 20 is 0.2 and the stage reaction of the downstream blade stages 26 is 0.5.

Fig. 3 is a diagram illustrating an exemplary working of the present invention such as the steam turbine 2 as illustrated in the previous examples. Specific values were obtained for a high-pressure steam turbine section. Fig. 3 shows how subcooling and nucleation rate (i.e., droplet formation) are affected by changing between turbine stages having a low, e.g., 0, stage reaction (e.g., impulse type) and turbine stages having the stage reaction of 50%. The time axis is indicative of the position within the turbine, and hence, what happens at each turbine blade stage. The big peak at around 0.005 seconds is caused by the nucleating blade stage, as described previously.

The low reaction turbine has a higher expansion rate, higher maximum value of subcooling and a higher maximum nucleation rate. Furthermore, the nucleation zone in the low reaction turbine is narrower than in the turbine with turbine blade stages having the stage reaction of 50%.

Fig. 4 is a diagram illustrating an exemplary working of the steam turbine 2 as illustrated in the previous examples. Fig. 4 shows how the Sauter mean diameter (i.e., droplet size) and entropy production are affected by changing between the same types of turbine stages as for the diagram of Fig. 3, i.e., between turbine stages having a low, e.g., 0, stage reaction (e.g., impulse type) and turbine blade stages having a stage reaction of 50%. The time axis, as in Fig. 3, is indicative of the position within the turbine, and hence, what happens at each turbine blade stage. The sudden rise at around 0.005 seconds is caused by the nucleating blade stage, as described previously.

The droplet sizes in the low reaction turbine are smaller (approximately halved) compared to the ones in the turbine with turbine stages having the stage reaction of 50%. Furthermore, as can be seen from Fig. 3 and 4 collectively, restoration of equilibrium (and therefore subcooling) happens faster in the low reaction turbine, which may be attributed to the smaller droplet size.

Fig. 5 and Fig. 6 present a number of steam turbines with different values of the stage reaction and of the stage loading. These steam turbines include blades stages 1 and 2 that are optional upstream blade stages. Stage 3 as the nucleating blade stage. Stages 4 to 9 that are the downstream blade stages. These steam turbines include the stage loading from 0.5 to 2.0 for the upstream blade stages, 1.4 to 2.2 for the nucleating blade stage, and 0.5 to 1.4 for the downstream blade stages. Steam turbines, outside of the scope of the invention, which are outside of these boundaries are also possible, e.g., the stage loading from 1.3 to 2.3 for the nucleating blade stage. Also, these steam turbine, which are outside of the scope of the invention, include the stage reaction from 0% to 60% for the upstream blade stages, from 0% to 55% for the nucleating blade stage, and from 40% to 60% for the downstream blade stages. The embodiment marked as "example" achieved an efficiency gain of about 1%. This embodiment is a best mode of operation.

Impact of the stage loading and the stage reaction was tested using specifically a high-pressure section of a steam turbine for a nuclear power plant. Obtained reduction in droplet size as presented on Fig. 5 and Fig. 6 had an impact on deposition rate and water losses. A reduction in droplet diameter from 3 microns to 1.5 microns resulted in decrease in non-dimensional deposition rate from approx. 0.06 to approx. 0.02, i.e., a reduction of a factor of 3. The coarse water losses scale with deposition rate. Therefore, reduced deposition rate reduced the coarse water losses.

Deposition rate is also relating to erosion and corrosion of steam turbines elements. In other words, a higher deposition rate contributes to faster erosion and corrosion and ultimately to an outage. The highest expected elongation of the time between starting of the steam turbine and stopping it due to erosion and/or corrosion is approximately 3 times, i.e., it follows the deposition rate. At the same time, it has to be recognized that the mechanisms of erosion and corrosion are quite complex and many factors can contribute to faster erosion and corrosion.

In an example, a steam turbine includes a turbine section with the blade stages designed as in Fig. 5 and Fig. 6. This section is a high-pressure section and the steam turbine is a part of a fossil power plant or a nuclear power plant. In other examples, this section is part of a small modular reactor.

In another example relating to manufacturing or modifying steam turbines, the blade stage includes impulse technology and is mounted using a disk and diaphragm arrangement, a compact diaphragm arrangement, or a drum arrangement.

The scope of the invention is not limited to the illustrated embodiment, and alterations and modifications can be carried out without deviating from the scope of the invention, as defined by the claims.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa. The use of "comprising" or "including" for an object means that said object has a particular feature, but also has other features.

### 6. LIST OF REFERENCES

- 2: steam turbine
- 4: turbine shaft
- 6: turbine axis
- 8: steam inlet
- 10: steam outlet
- 12: turbine stages
- 14: row of fixed blades
- 16: row of moving blades
- 18: casing
- 20: nucleating blade stage
- 22: nucleating row of fixed blades
- 24: nucleating row of moving blades
- 26: downstream blade stages
- 28: upstream blade stages
- 30: airfoil
- R1: minimum radius of blade
- R2: maximum radius of blade
- Rref: reference radius of blade

## Claims

1. A steam turbine (2) including at least one steam turbine section, wherein said at least one steam turbine section comprises at least three blade stages (12), wherein said blade stages (12) include a row of fixed blades (14) and an accompanying row of moving blades (16) that is downstream of the row of fixed blades (14), and wherein said blade stages include:
a single nucleating blade stage (20),
at least one downstream blade stage (26), and
at least one upstream blade stage (28),
wherein said at least one downstream blade stage (26) is located downstream of said nucleating blade stage (20) and said at least one upstream blade stage (28) is located upstream of said nucleating blade stage (20), and wherein said nucleating blade stage is including the location of the Wilson point,
**characterized in that**
the stage loading of said at least one upstream blade stage (28) is from 0.5 to 2.0, the stage loading of the nucleating blade stage (20) is from 1.4 to 2.2, and the stage loading of said at least one downstream blade stage (26) is from 0.5 to 1.4, wherein the stage loading of said at least one downstream blade stage (26) is lower than the stage loading of the nucleating blade stage (20) and the stage loading of said at least one upstream blade stage (28) is lower than the stage loading of the nucleating blade stage (20), but is higher than the stage loading of said at least one downstream blade stage (26), and
the stage reaction for the nucleating blade stage (20) is from 40% to 55% and the stage reaction of said at least one downstream blade stage (26) is higher than for the nucleating blade stage (20) and is from 40% to 60%.

2. The steam turbine (2) according to claim 1, wherein the stage loading of said at least one downstream blade stage (26) is 60-70% of the stage loading of the nucleating blade stage (20) or less and / or not less than 20-35% of the stage loading of the nucleating blade stage (20).

3. The steam turbine (2) according to any of claims 1-2, wherein the nucleating blade stage is an impulse blade stage.

4. The steam turbine (2) according to any of claims 1-3, wherein the stage reaction of said at least one upstream blade stage (28) is from 0% to 60%.

5. The steam turbine (2) according to claim 4, wherein the stage reaction of said at least one upstream blade stage (28) is within 40-60% and the stage loading of said at least one upstream blade stage (28) is within 0.5-1.5 or the stage reaction of said at least one upstream blade stage (28) is within 0%-20% and the stage loading of said at least one upstream blade stage is within 1.5-2.0.

6. The steam turbine (2) according to claim 4 or 5, wherein said at least one upstream blade stage (28) is an axial flow stage, radial flow stage or an axial-radial flow stage.

7. The steam turbine (2) according to any of claims 1-6, wherein said steam turbine section is selected from a group including a high-pressure section, a medium-pressure section and a low-pressure section.

8. The steam turbine (2) according to any of claims 1-7, **characterized in that** the steam turbine (2) includes two said steam turbine sections, wherein one is a high-pressure section and one is a medium-pressure section, or wherein the steam turbine (2) includes three said steam turbine sections wherein one is a high-pressure section, one is a medium-pressure section and one is a low-pressure section.

9. A small modular reactor, wherein the small modular reactor includes a steam turbine (2) according to any of claims 1-8.

10. A power plant selected from a group including a fossil power plant, a combined cycle power plant, a renewable energy power plant, a waste-to-energy power plant, and a nuclear power plant, wherein the power plant includes a steam turbine (2) according to any of claims 1-8.

11. A use of a steam turbine (2) defined in any of claims 1-8 for increasing power production of a power plant or for increasing of efficiency of an industrial process.

12. A method of manufacturing or servicing of a steam turbine (2), wherein the steam turbine (2) includes at least one steam turbine section, wherein said at least one steam turbine section comprises at least three blade stages (12), wherein said blade stages (12) include a row of fixed blades (14) and an accompanying row of moving blades (16) that is downstream of the row of fixed blades (14), and wherein the method includes providing a single nucleating blade stage (2) to the steam turbine (2) at the location of the Wilson point, at least one downstream blade stage (26) downstream of said nucleating blade stage (20) and at least one upstream blade stage (28) upstream of said nucleating blade stage (20), wherein the nucleating blade stage (20) has a value of expansion rate higher than the value of expansion rates of the other blade stages (26, 28) within the steam turbine (2),
**characterized in that**
the stage loading of said at least one upstream blade stage (28) is from 0.5 to 2.0, the stage loading of the nucleating blade stage (20) is from 1.4 to 2.2, and the stage loading of said at least one downstream blade stage (26) is from 0.5 to 1.4, wherein the stage loading of said at least one downstream blade stage (26) is lower than the stage loading of the nucleating blade stage (20) and the stage loading of said at least one upstream blade stage (28) is lower than the stage loading of the nucleating blade stage (20), but is higher than the stage loading of said at least one downstream blade stage (26), and
the stage reaction for the nucleating blade stage (20) is from 40% to 55% and the stage reaction of said at least one downstream blade stage (26) is higher than for the nucleating blade stage (20) and is from 40% to 60%.

13. The method of manufacturing or servicing of a steam turbine (2) according to claim 12, wherein the stage reaction of said at least one upstream blade stage (28) is from 0% to 60%.

## Patentansprüche

1. Dampfturbine (2), die mindestens einen Dampfturbinenabschnitt einschließt, wobei der mindestens eine Dampfturbinenabschnitt mindestens drei Schaufelstufen (12) umfasst, wobei die Schaufelstufen (12) eine Reihe von feststehenden Schaufeln (14) und eine begleitende Reihe von bewegbaren Schaufeln (16) einschließen, die der Reihe von feststehenden Schaufeln (14) nachgelagert ist, und wobei die Schaufelstufen einschließen:
eine einzige Keimbildungsschaufelstufe (20),
mindestens eine nachgelagerte Schaufelstufe (26), und
mindestens eine vorgelagerte Schaufelstufe (28),
wobei die mindestens eine nachgelagerte Schaufelstufe (26) der Keimbildungsschaufelstufe (20) nachgelagert angeordnet ist und die mindestens eine vorgelagerte Schaufelstufe (28) der Keimbildungsschaufelstufe (20) vorgelagert angeordnet ist, und wobei die Keimbildungsschaufelstufe die Position des Wilson-Punktes einschließt,
**dadurch gekennzeichnet, dass**
die Stufenbelastung der mindestens einen vorgelagerten Schaufelstufe (28) von 0,5 bis 2,0 beträgt, die Stufenbelastung der Keimbildungsschaufelstufe (20) von 1,4 bis 2,2 beträgt und die Stufenbelastung der mindestens einen nachgelagerten Schaufelstufe (26) von 0,5 bis 1,4 beträgt, wobei die Stufenbelastung der mindestens einen nachgelagerten Schaufelstufe (26) niedriger als die Stufenbelastung der Keimbildungsschaufelstufe (20) ist und die Stufenbelastung der mindestens einen vorgelagerten Schaufelstufe (28) niedriger als die Stufenbelastung der Keimbildungsschaufelstufe (20) ist, aber höher als die Stufenbelastung der mindestens einen nachgelagerten Schaufelstufe (26) ist, und
die Stufenreaktion für die Keimbildungsschaufelstufe (20) von 40 % bis 55 % ist und die Stufenreaktion der mindestens einen nachgelagerten Schaufelstufe (26) höher als für die Keimbildungsschaufelstufe (20) ist und von 40 % bis 60 % beträgt.

2. Dampfturbine (2) nach Anspruch 1, wobei die Stufenbelastung der mindestens einen nachgelagerten Schaufelstufe (26) 60-70 % der Stufenbelastung der Keimbildungsschaufelstufe (20) oder weniger und/oder nicht weniger als 20-35 % der Stufenbelastung der Keimbildungsschaufelstufe (20) beträgt.

3. Dampfturbine (2) nach einem der Ansprüche 1 bis 2, wobei die Keimbildungsschaufelstufe eine Impulsschaufelstufe ist.

4. Dampfturbine (2) nach einem der Ansprüche 1 bis 3, wobei die Stufenreaktion der mindestens einen vorgelagerten Schaufelstufe (28) von 0 % bis 60 % beträgt.

5. Dampfturbine (2) nach Anspruch 4, wobei die Stufenreaktion der mindestens einen vorgelagerten Schaufelstufe (28) innerhalb von 40-60 % liegt und die Stufenbelastung der mindestens einen vorgelagerten Schaufelstufe (28) innerhalb von 0,5-1,5 liegt oder die Stufenreaktion der mindestens einen vorgelagerten Schaufelstufe (28) innerhalb von 0 %-20 % liegt und die Stufenbelastung der mindestens einen vorgelagerten Schaufelstufe innerhalb von 1,5-2,0 liegt.

6. Dampfturbine (2) nach Anspruch 4 oder 5, wobei die mindestens eine vorgelagerte Schaufelstufe (28) eine Axialströmungsstufe, Radialströmungsstufe oder eine Axial-Radial-Strömungsstufe ist.

7. Dampfturbine (2) nach einem der Ansprüche 1 bis 6, wobei der Dampfturbinenabschnitt aus einer Gruppe ausgewählt ist, die einen Hochdruckabschnitt, einen Mitteldruckabschnitt und einen Niederdruckabschnitt einschließt.

8. Dampfturbine (2) nach einem der Ansprüche 1 bis 7,
**dadurch gekennzeichnet, dass** die Dampfturbine (2) zwei Dampfturbinenabschnitte einschließt, wobei einer ein Hochdruckabschnitt ist und einer ein Mitteldruckabschnitt ist, oder wobei die Dampfturbine (2) drei Dampfturbinenabschnitte einschließt, wobei einer ein Hochdruckabschnitt ist, einer ein Mitteldruckabschnitt ist und einer ein Niederdruckabschnitt ist.

9. Kleiner modularer Reaktor, wobei der kleine modulare Reaktor eine Dampfturbine (2) nach einem der Ansprüche 1 bis 8 einschließt.

10. Kraftwerk, das aus einer Gruppe ausgewählt ist, die ein fossiles Kraftwerk, ein Kombikraftwerk, ein Kraftwerk für erneuerbare Energien, ein Müllheizkraftwerk und ein Kernkraftwerk einschließt, wobei das Kraftwerk eine Dampfturbine (2) nach einem der Ansprüche 1 bis 8 einschließt.

11. Verwendung einer Dampfturbine (2) nach einem der Ansprüche 1 bis 8 zum Erhöhen der Stromerzeugung eines Kraftwerks oder zum Erhöhen der Effizienz eines industriellen Prozesses.

12. Verfahren zum Herstellen oder Warten einer Dampfturbine (2), wobei die Dampfturbine (2) mindestens einen Dampfturbinenabschnitt einschließt, wobei der mindestens eine Dampfturbinenabschnitt mindestens drei Schaufelstufen (12) umfasst, wobei die Schaufelstufen (12) eine Reihe von feststehenden Schaufeln (14) und eine begleitende Reihe von bewegbaren Schaufeln (16) einschließen, die der Reihe von feststehenden Schaufeln (14) nachgelagert ist, und wobei das Verfahren ein Bereitstellen einer einzigen Keimbildungsschaufelstufe (2) für die Dampfturbine (2) an der Position des Wilson-Punktes, mindestens einer nachgelagerten Schaufelstufe (26) der Keimbildungsschaufelstufe (20) nachgelagert und mindestens einer vorgelagerten Schaufelstufe (28) der Keimbildungsschaufelstufe (20) vorgelagert einschließt, wobei die Keimbildungsschaufelstufe (20) einen Wert einer Expansionsrate aufweist, der höher als der Wert der Expansionsraten der anderen Schaufelstufen (26, 28) innerhalb der Dampfturbine (2) ist,
**dadurch gekennzeichnet, dass**
die Stufenbelastung der mindestens einen vorgelagerten Schaufelstufe (28) von 0,5 bis 2,0 beträgt, die Stufenbelastung der Keimbildungsschaufelstufe (20) von 1,4 bis 2,2 beträgt und die Stufenbelastung der mindestens einen nachgelagerten Schaufelstufe (26) von 0,5 bis 1,4 beträgt, wobei die Stufenbelastung der mindestens einen nachgelagerten Schaufelstufe (26) niedriger als die Stufenbelastung der Keimbildungsschaufelstufe (20) ist und die Stufenbelastung der mindestens einen vorgelagerten Schaufelstufe (28) niedriger als die Stufenbelastung der Keimbildungsschaufelstufe (20) ist, aber höher als die Stufenbelastung der mindestens einen nachgelagerten Schaufelstufe (26) ist, und
die Stufenreaktion für die Keimbildungsschaufelstufe (20) von 40 % bis 55 % ist und die Stufenreaktion der mindestens einen nachgelagerten Schaufelstufe (26) höher als für die Keimbildungsschaufelstufe (20) ist und von 40 % bis 60 % beträgt.

13. Verfahren zum Herstellen oder Warten einer Dampfturbine (2) nach Anspruch 12, wobei die Stufenreaktion der mindestens einen vorgelagerten Schaufelstufe (28) von 0 % bis 60 % beträgt.

## Revendications

1. Turbine à vapeur (2) incluant au moins une section de turbine à vapeur, dans laquelle ladite au moins une section de turbine à vapeur comprend au moins trois étages d'aubes (12), dans laquelle lesdits étages d'aubes (12) comportent une rangée d'aubes fixes (14) et une rangée d'aubes mobiles (16) l'accompagnant qui est en aval de la rangée d'aubes fixes (14), et dans laquelle lesdits étages d'aubes comportent :
un seul étage d'aubes de nucléation (20),
au moins un étage d'aubes en aval (26), et
au moins un étage d'aubes en amont (28),
dans laquelle ledit au moins un étage d'aubes en aval (26) est situé en aval dudit étage d'aubes de nucléation (20) et ledit au moins un étage d'aubes en amont (28) est situé en amont dudit étage d'aubes de nucléation (20), et dans laquelle ledit étage d'aubes de nucléation comporte l'emplacement du point de Wilson,
**caractérisée en ce que**
le chargement d'étage dudit au moins un étage d'aubes en amont (28) est de 0,5 à 2,0, le chargement d'étage de l'étage d'aubes de nucléation (20) est de 1,4 à 2,2, et le chargement d'étage dudit au moins un étage d'aubes en aval (26) est de 0,5 à 1,4, dans laquelle le chargement d'étage dudit au moins un étage d'aubes en aval (26) est inférieur au chargement d'étage de l'étage d'aubes de nucléation (20) et le chargement d'étage dudit au moins un étage d'aubes en amont (28) est inférieur au chargement d'étage de l'étage d'aubes de nucléation (20), mais est supérieur au chargement d'étage dudit au moins un étage d'aubes en aval (26), et
la réaction d'étage pour l'étage d'aubes de nucléation (20) est de 40 % à 55 % et la réaction d'étage dudit au moins un étage d'aubes en aval (26) est plus élevée que pour l'étage d'aubes de nucléation (20) et est de 40 % à 60 %.

2. Turbine à vapeur (2) selon la revendication 1, dans laquelle le chargement d'étage dudit au moins un étage d'aubes en aval (26) représente 60 à 70 % du chargement d'étage de l'étage d'aubes de nucléation (20) ou moins et/ou pas moins de 20 à 35 % du chargement d'étage de l'étage d'aubes de nucléation (20).

3. Turbine à vapeur (2) selon l'une quelconque des revendications 1 à 2, dans laquelle l'étage d'aubes de nucléation est un étage d'aubes d'impulsion.

4. Turbine à vapeur (2) selon l'une quelconque des revendications 1 à 3, dans laquelle la réaction d'étage dudit au moins un étage d'aubes en amont (28) est de 0 % à 60 %.

5. Turbine à vapeur (2) selon la revendication 4, dans laquelle la réaction d'étage dudit au moins un étage d'aubes en amont (28) est dans la limite de 40 à 60 % et le chargement d'étage dudit au moins un étage d'aubes en amont (28) est dans la limite de 0,5 à 1,5 ou la réaction d'étage dudit au moins un étage d'aubes en amont (28) est dans la limite de 0 % à 20 % et le chargement d'étage dudit au moins un étage d'aubes en amont est dans la limite de 1,5 à 2,0.

6. Turbine à vapeur (2) selon la revendication 4 ou 5, dans laquelle ledit au moins un étage d'aubes en amont (28) est un étage d'écoulement axial, un étage d'écoulement radial ou un étage d'écoulement axial-radial.

7. Turbine à vapeur (2) selon l'une quelconque des revendications 1 à 6, dans laquelle ladite section de turbine à vapeur est choisie dans un groupe incluant une section haute pression, une section moyenne pression et une section basse pression.

8. Turbine à vapeur (2) selon l'une quelconque des revendications 1 à 7, **caractérisée en ce que** la turbine à vapeur (2) comporte deux dites sections de turbine à vapeur, l'une étant une section haute pression et l'une étant une section moyenne pression, ou dans laquelle la turbine à vapeur (2) comporte trois dites sections de turbine à vapeur, l'une étant une section haute pression, l'une étant une section moyenne pression et l'une étant une section basse pression.

9. Petit réacteur modulaire, le petit réacteur modulaire comportant une turbine à vapeur (2) selon l'une quelconque des revendications 1 à 8.

10. Centrale électrique choisie dans un groupe incluant une centrale thermique fossile, une centrale électrique à cycle combiné, une centrale électrique à énergie renouvelable, une centrale électrique de valorisation énergétique des déchets, et une centrale nucléaire, la centrale électrique comportant une turbine à vapeur (2) selon l'une quelconque des revendications 1 à 8.

11. Utilisation d'une turbine à vapeur (2) définie selon l'une quelconque des revendications 1 à 8 pour augmenter la production d'énergie d'une centrale électrique ou pour augmenter l'efficacité d'un procédé industriel.

12. Procédé de fabrication ou d'entretien d'une turbine à vapeur (2), dans lequel la turbine à vapeur (2) comporte au moins une section de turbine à vapeur, dans lequel ladite au moins une section de turbine à vapeur comprend au moins trois étages d'aubes (12), dans lequel lesdits étages d'aubes (12) comportent une rangée d'aubes fixes (14) et une rangée d'aubes mobiles (16) l'accompagnant qui est en aval de la rangée d'aubes fixes (14), et dans lequel le procédé comporte la fourniture d'un seul étage d'aubes de nucléation (2) à la turbine à vapeur (2) à l'emplacement du point de Wilson, au moins un étage d'aubes en aval (26) en aval dudit étage d'aubes de nucléation (20) et au moins un étage d'aubes en amont (28) en amont dudit étage d'aubes de nucléation (20), dans lequel l'étage d'aubes de nucléation (20) a une valeur de taux d'expansion supérieure à la valeur des taux d'expansion des autres étages d'aube (26, 28) à l'intérieur de la turbine à vapeur (2),
**caractérisé en ce que**
le chargement d'étage dudit au moins un étage d'aubes en amont (28) est de 0,5 à 2,0, le chargement d'étage de l'étage d'aubes de nucléation (20) est de 1,4 à 2,2, et le chargement d'étage dudit au moins un étage d'aubes en aval (26) est de 0,5 à 1,4, dans laquelle le chargement d'étage dudit au moins un étage d'aubes en aval (26) est inférieur au chargement d'étage de l'étage d'aubes de nucléation (20) et le chargement d'étage dudit au moins un étage d'aubes en amont (28) est inférieur au chargement d'étage de l'étage d'aubes de nucléation (20), mais est supérieur au chargement d'étage dudit au moins un étage d'aubes en aval (26), et
la réaction d'étage pour l'étage d'aubes de nucléation (20) est de 40 % à 55 % et la réaction d'étage dudit au moins un étage d'aubes en aval (26) est plus élevée que pour l'étage d'aubes de nucléation (20) et est de 40 % à 60 %.

13. Procédé de fabrication ou d'entretien d'une turbine à vapeur (2) selon la revendication 12, dans lequel la réaction d'étage dudit au moins un étage d'aubes en amont (28) est de 0 % à 60 %.
